# EUROPEAN PATENT SPECIFICATION

(11) **EP 4 613 345 B1**
(45) Date of publication and mention of the grant of the patent: **02.12.2026**
(21) Application number: 25158514.7
(22) Date of filing: 18.02.2025
(51) Int. Cl.: A63F 13/52, A63F 13/67

(54) **APPARATUS, SYSTEMS AND METHODS FOR VIDEO GAME ANALYSIS**
VORRICHTUNG, SYSTEME UND VERFAHREN ZUR VIDEOSPIELANALYSE
APPAREIL, SYSTÈMES ET PROCÉDÉS D'ANALYSE DE JEU VIDÉO

(30) Priority: 07.03.2024 GB 202403301
(43) Date of publication of application: 10.09.2025
(73) Proprietor: Sony Interactive Entertainment Inc., Tokyo 108-0075 (JP)
(72) Inventor: MOSS, Guy, London, W1F 7LP (GB); BRADLEY, Timothy, London, W1F 7LP (GB); AMADORI, Pierluigi, London, W1F 7LP (GB); SPICK, Ryan, London, W1F 7LP (GB); RAINA, Ayush, London, W1F 7LP (GB)
(74) Representative: Fish & Richardson P.C.

(56) References cited:
- CN-A- 116 672 707
- US-A1- 2022 253 966
- US-A1- 2022 392 116
- US-A1- 20240 005 526
- US-B2- 10 740 619

## Description

### Field of the Disclosure

The present disclosure relates to the field of processing data. In particular, the present disclosure relates to an apparatus and method for processing data for video game analysis as defined in the appended claims.

### Description of the Prior Art

The "background" description provided herein is for the purpose of generally presenting the context of the disclosure. Work of the presently named inventors, to the extent it is described in this background section, as well as aspects of the description which may not otherwise qualify as prior art at the time of filing, are neither expressly or impliedly admitted as prior against the present disclosure.

Errors (such as bugs, glitches and other similar defects) can arise during video games for a number of reasons. Quality assurance testing for video games requires testers to play video games to identify and log errors so as to allow error fixing by developers. Quality assurance testing is thus an important aspect in the development of video games requiring significant amounts of time to ensure satisfactory quality which can result in lengthy development times for video games. Occurrences of errors within video games can potentially lead to poor functionality as well as loss of immersion and potentially create a poor initial impression of the video game upon release. There is therefore a need to improve detection of errors for video games.

It is in this context that the present disclosure arises.
US 2022/392116 A1 (VEMBAR DEEPAK [US] ET AL) 8 December 2022 discusses a neural frame extrapolation rendering mechanism.
US 10 740 619 B2 (UBER TECHNOLOGIES INC [US]) 11 August 2020 discusses characterising content with a predictive error representation.
US 2024/005526 A1 (OLKHOVIK ANTON YURYEVICH [RU] ET AL) 4 January 2024 discusses a device and method for optimising power consumption during frames rendering.

### SUMMARY

Various aspects and features of the present disclosure are defined in the appended claims. Example embodiments include a data processing apparatus, a method, a computer program and a machine-readable, non-transitory storage medium which stores such a computer program.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
Figure 1 is a schematic diagram illustrating an example of an entertainment device;
Figure 2 is a schematic diagram illustrating a data processing apparatus for detecting one or more errors for video images for a video game;
Figure 3 is a schematic diagram illustrating an example system;
Figure 4 is a schematic diagram illustrating a sequence of video images for a video game;
Figures 5 and 6 are schematic diagrams illustrating data processing apparatuses; and
Figure 7a and 7b are schematic flowchart illustrating methods.

### DESCRIPTION OF THE EMBODIMENTS

In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

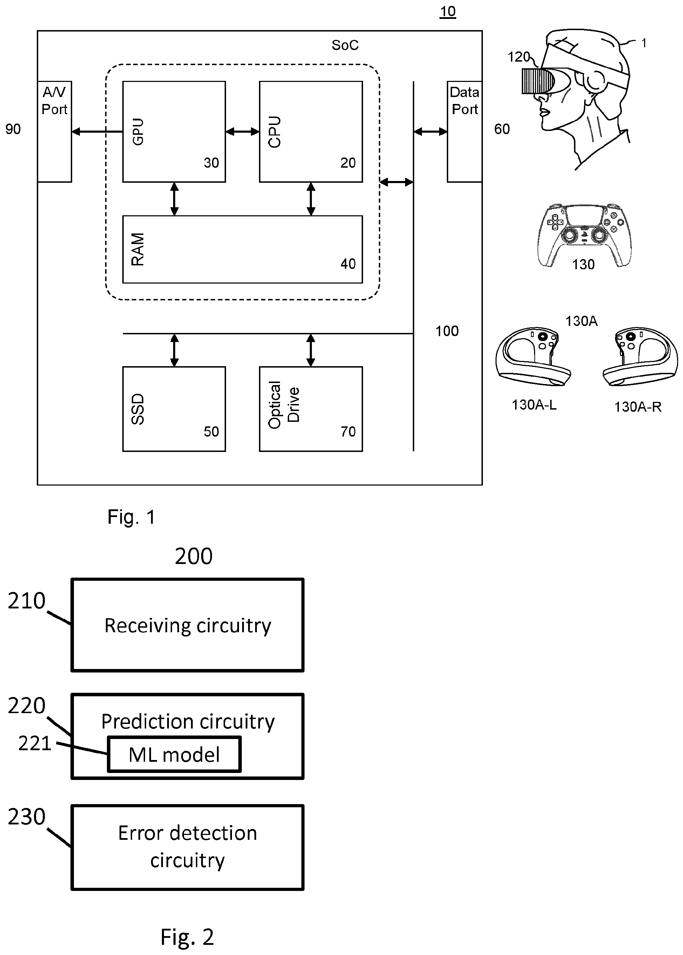

Referring now to the drawings, wherein like reference numerals designate identical or corresponding parts, Figure 1 shows an example of an entertainment device 10 which may be a computer or video game console, for example.

The entertainment device 10 comprises a central processor 20. The central processor 20 may be a single or multi core processor. The entertainment device also comprises a graphical processing unit or GPU 30. The GPU can be physically separate to the CPU, or integrated with the CPU as a system on a chip (SoC).

The GPU, optionally in conjunction with the CPU, may process data and generate video images (image data) and optionally audio for output via an AV output. Optionally, the audio may be generated in conjunction with or instead by an audio processor (not shown).

The video and optionally the audio may be presented to a television or other similar device. Where supported by the television, the video may be stereoscopic. The audio may be presented to a home cinema system in one of a number of formats such as stereo, 5.1 surround sound or 7.1 surround sound. Video and audio may likewise be presented to a head mounted display unit 120 worn by a user 1.

The entertainment device also comprises RAM 40, and may have separate RAM for each of the CPU and GPU, and/or may have shared RAM. The or each RAM can be physically separate, or integrated as part of an SoC. Further storage is provided by a disk 50, either as an external or internal hard drive, or as an external solid state drive, or an internal solid state drive.

The entertainment device may transmit or receive data via one or more data ports 60, such as a USB port, Ethernet^{®} port, Wi-Fi^{®} port, Bluetooth^{®} port or similar, as appropriate. It may also optionally receive data via an optical drive 70.

Audio/visual outputs from the entertainment device are typically provided through one or more A/V ports 90, or through one or more of the wired or wireless data ports 60.

An example of a device for displaying images output by the entertainment device is the head mounted display 'HMD' 120 worn by the user 1. The images output by the entertainment device may be displayed using various other devices - e.g. using a conventional television display connected to A/V ports 90.

Where components are not integrated, they may be connected as appropriate either by a dedicated data link or via a bus 100.

Interaction with the device is typically provided using one or more handheld controllers 130, 130A and/or one or more VR controllers 130A-L,R in the case of the HMD. The user typically interacts with the system, and any content displayed by, or virtual environment rendered by the system, by providing inputs via the handheld controllers 130, 130A. For example, when playing a game, the user may navigate around the game virtual environment by providing inputs using the handheld controllers 130, 130A.

Figure 1 therefore provides an example of a data processing apparatus suitable for executing an application such as a video game.

Detection of errors for video games typically requires manual observation by users for identification and logging of errors. For example, one or more testers may be required to play through a video game (or portions thereof) so as to compare what occurs in the video games with what is typically expected and report errors (e.g. anomalies such as bugs, glitches) arising during the video game. The process of manually logging errors is thus typically a slow and labour intensive process requiring user identification of the observed error, followed by recording of the error, and then returning to testing. In some cases, end users of video games may also be able to report errors. Whilst some end users may report errors encountered during their video game, it is typically the case that many errors go unreported by end users. More generally, the occurrence of errors during video games can adversely impact the functionality, immersion and/or enjoyment for a video game. It is therefore desirable to provide improved error detection for video games.

Figure 2 schematically illustrates a data processing apparatus 200 in accordance with embodiments of the disclosure. The data processing apparatus 200 is suitable for detecting one or more errors for a sequence of video images for a video game. The data processing apparatus 200 comprises receiving circuitry 210, prediction circuitry 220 and error detection circuitry 230.

The data processing apparatus 200 may be provided as part of a server and/or as part of a user device (e.g. an entertainment device such as that in Figure 1). For example, the data processing apparatus 200 may be provided as part of a user device, such as the entertainment device in Figure 1, so that video images generated by the entertainment device for display to a user for playing an interactive video game can be processed by the data processing apparatus 200 according to the techniques to be discussed below. In some examples, the data processing apparatus 200 may be provided as part of a server apparatus (such as a gaming server or one or more other servers associated therewith).

Cloud gaming techniques in which video games are executed using remote server devices and associated video images are streamed to users are generally known and are not discussed in detail. The data processing apparatus 200 may be operable to receive video images associated with a cloud gaming service for allowing error detection with respect to such video images. In some examples, processing for error detection may be performed during and/or after a session for a cloud based video game. More generally, the data processing apparatus 200 may receive video images generated by one or more server devices for processing according to the techniques to be discussed below. In some examples, the data processing apparatus 200 may be provided as part of a server apparatus associated with a gaming platform for providing quality assurance for one or more sessions of one or more video games which may be locally executed by one or more local user devices and/or remotely executed by one or more remote server devices. Hence more generally, the data processing apparatus 200 is operable to receive a sequence of video images for a video game, and the source device responsible for generating the video images is not particularly limited.

In some examples, the received sequence of video images may be live images for a currently executing session of a video game. Alternatively, the received sequence of video images may be recorded images from a previous session of a video game. In some examples, the data processing apparatus 200 is operable to receive a sequence of video images from a storage device that stores video recordings for game sessions. In some examples, the data processing apparatus 200 may comprise storage circuitry to store a plurality of video recordings for one or more different video games so that some or all of the video recordings can be processed according to the techniques to be discussed below. In some examples, an image sequence for a live or previously recorded game session may be streamed to the data processing apparatus 200. In some examples, an image sequence for a previously recorded game session may be downloaded to the data processing apparatus 200.

The data processing apparatus 200 comprises the receiving circuitry 210 which is operable to receive at least one sequence of video images according to any of the techniques discussed above. A sequence of video images comprising multiple successive video images corresponding to at least a temporal portion of some (or all) of a session for a video game can thus be received. The image sequence may have any suitable frame rate and the images may have any suitable image resolution. The receiving circuitry 210 may receive a sequence of images from another device (e.g. a video game processing device), either directly or indirectly, via one or more of a wired and/or wireless communication. Alternatively or in addition, the receiving circuitry 210 may receive a sequence of images from a processing unit (e.g. GPU) or storage unit provided as part of the data processing apparatus (e.g. via at least one data bus).

The techniques herein will generally be discussed with respect to a single sequence of images for a video game. However, it will be appreciated that the data processing apparatus 200 may in some cases receive a plurality of respective image sequences, in which each respective image sequence is associated with a respective executed instance of a video game. The plurality of respective video image sequences may relate to a same multiplayer video game and/or may relate to a number of different video games for which error detection is to be performed. For example, a server may execute a number of instances of a video game which may be a single player video game and video image sequences for the executed instances can be received by the data processing apparatus 200.

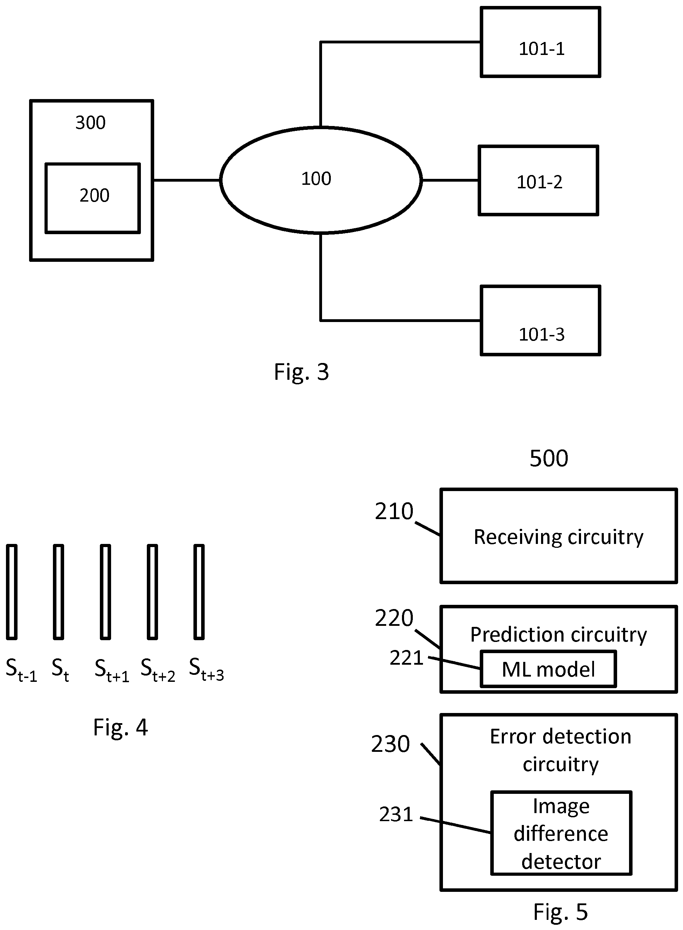

Figure 3 schematically illustrates an example of a system in which the data processing apparatus 200 is provided as part of a server apparatus 300. The system comprises the server apparatus 300 which communicates with the client devices 101-1, 101-2 and 101-3 via the network 100 (which may be any suitable communications network e.g. the Internet). In the example of Figure 3, the client devices may each be associated with a different user. The data processing apparatus 200 may receive video image sequences generated by each of the client devices. In the example of Figure 3, any suitable communication protocol(s) and video coding scheme(s) may be used for communications between the devices. Hence, in the case in which video games are at least partially executed locally by user devices, video image sequences may be communicated to and received by the data processing apparatus 200 for use according to the techniques to be discussed below. Alternatively, in the example of Figure 3, the server 300 may be a game server (or other similar server) that at least partially executes one or more video games and streams video images for reception by the client devices. Hence, the data processing apparatus 200 may receive video images generated by the server 300 for use according to the techniques to be discussed below for proving caption.

Whilst Figure 3 shows the data processing apparatus 200 as part of the server 300, in some cases the data processing apparatus 200 and server 300 may be separate devices. For example, the server 300 may be a game server and the data processing apparatus 200 may be another server that performs quality assurance analysis for an instance of a video game executed by the game server by receiving at least video images for the instance of the video game.

Whilst Figure 3 shows an example of a system comprising three client devices, the number of client devices is not particularly limited. There may be any suitable number of client devices and other similar examples are considered. For example, the system could potentially comprise a single client device. Alternatively, the system could potentially comprise a large number of respective client devices of the order of tens, hundreds or even thousands.

Hence, the data processing apparatus 200 may be configured to receive one or more respective video image sequences. The data processing apparatus 200 may be configured to detect one or more errors according to the techniques to be discussed below.

In addition to receiving a sequence of video images, the receiving circuitry 210 is operable to receive one or more action inputs associated with a received sequence of video images. The one or more action inputs may correspond to action inputs associated with a non-player character in the video game and/or action inputs provided by a player user.

The sequence of video images may visually depict a video game for a player user (e.g. any of a first or third person viewpoint or similar viewpoint) and the action inputs may correspond to action inputs provided by the player user for controlling a virtual character (e.g. using any suitable input device such as a handheld video game controller). In other examples, the sequence of video images may visually depict a video game for a non-player character (NPC) and the action inputs may correspond to action inputs provided by an agent playing the video game.

For example, using a handheld video game controller, a user may specify one or more of a directional input (e.g. using one or more of a D-pad and a control stick) and a function input (e.g. a button press corresponding to a jump, crouch, punch or other similar action) for controlling a virtual character. The action inputs received by the receiving circuitry 210 may have any suitable format. Generally, the action inputs specify one or more actions to be performed in a video game. The action inputs may have been obtained based on translating raw inputs from an input device to action inputs (e.g. using game code associated with the video game). In some examples, the action inputs may have been obtained using a video game NPC.

In some cases, the action inputs may correspond to action inputs for controlling positioning of a virtual camera with respect to a virtual environment. Alternatively or in addition, the action inputs may correspond to action inputs for controlling one or more of positioning of a virtual character in a video game and/or functions associated with that virtual character. Hence, a given action input may specify one or more of a directional action and/or a functional action to be performed for a virtual character in a video game.

More generally, the one or more action inputs may comprise an action input for controlling an entity (e.g. virtual character or other virtual object) included in one or more of the video images. Alternatively or in addition, the one or more action inputs may comprise an action input for controlling an entity (e.g. virtual character) not included in one or more of the video images. For example, the video images may be generated from a first person viewpoint for a virtual character such that the virtual character is not depicted in the video images and action inputs are used for controlling one or more of position and/or orientation of the viewpoint for the video images.

The receiving circuitry 210 is operable to receive a sequence of video images for a video game and one or more action inputs associated with the sequence of video images, in which one or more of the action inputs relate to actions to be performed for one or more of: an entity (e.g. virtual character) included in a video image; and a viewpoint for the video image. For example, an action input may be indicative of a forward direction movement for causing a forward movement of one or more of a virtual character and a virtual viewpoint. It will be appreciated that other similar directional movements may be indicated by action inputs. In some examples, an action input may be indicative of a function associated with a virtual character, such as jump, crouch, roll, punch, dive and so on. It will be appreciated that the techniques of the present disclosure can be applicable for a wide range of video games of potentially different genres. For example, the video game may be a first person shooter video game for which action inputs such as shooting a weapon, throwing an item and so on may be available. In other cases, the video game may be a sports video game for playing a sport such as basketball, soccer, ice hockey and so on.

Referring again to Figure 2, the prediction circuitry 220 is configured to generate a predicted video image in dependence on at least one video image of the sequence of video images and an action input associated with the at least one video image. The prediction circuitry 220 comprises a trained machine learning (ML) model 221 to generate the predicted video image. The at least one video image and the action input associated with the at least one video image can be input to the trained ML model 221. In response, the trained ML model 221 generates a predicted video image which visually represents a state which is expected to occur after the at least one video image. A given video image can be representative of a state for the video game at a given point in time, and the associated action input can be representative of an action input to be used for modifying the state to progress the video game to another state for another point in time that is ahead of the given point in time. Using the video image and the associated action input, the prediction circuitry 220 is operable to generate a predicted video image for representing an expected video image that is expected for the video game. Moreover, the prediction circuitry 220 is operable to generate the predicted video image for representing an expected video image that is expected for a case in which the instance of the video game is error free.

The error detection circuitry 230 is configured to detect, for one or more video images subsequent to the at least one video image, one or more errors in dependence on the predicted video image. In this way, using a video image visually depicting the video game at a given time and the associated action input, a predicted video image can be obtained using the trained ML model 221 and used to evaluate one or more other video images that is/are subsequent to the video image for allowing error detection.

The ML model 221 can be trained using any of the techniques to be discussed below. The ML model can be implemented as a processor-implemented neural network (NN) which may be implemented using one or more of: one or more CPUs, one or more GPUs, one or more FPGAs, and one or more deep learning processors (DLP).

A processor-implemented neural network generally comprises an input layer, one or more hidden layers and an output layer. At least some of the received video images and one or more associated action inputs can be input to the ML model 221. The ML model 221 provides the functionality of mapping the input to a predicted video image associated with a time that is subsequent to a time associated with one or more of the video images input to the ML model 221.

In some embodiments of the disclosure, the ML model 221 is operable to use a single video image and a respective action input to generate one or more predicted video images. Figure 4 schematically illustrates an example of a sequence of video images for a video game in which time progresses from left to right and the image frame St is subsequent in time to the image frame Sₜ₋₁. Similarly, the image frame Sₜ₊₁ is subsequent in time to the image frame St and so on. In the example of Figure 4, the sequence of video images may have any suitable frame rate and there may be one or more image frames between the image frames shown in the figure.

For example, the video image Sₜ₋₁ associated with a time t-1 and an action input Aₜ₋₁ may be input to the trained ML model 221 to obtain a predicted video image for a subsequent time (e.g. any of a time such as t, t+1 and/or t+2 and so on). Hence, using the video image Sₜ₋₁ and the associated action input Aₜ₋₁, a predicted video image corresponding to a time that is ahead of (i.e. subsequent to) the time t-1 can be obtained. The error detection circuitry 230 is thus operable to use the predicted video image for detecting at least whether one or more errors are included in one or more of the video images subsequent to the time t-1.

In addition to detecting occurrence of one or more errors, the error detection circuitry 230 can optionally detect one or more properties associated with one or more of the errors. A property such as an image location, image region and/or an object type may be detected. For example, a type of object associated with an error may be detected (e.g. due to the object type not being present in the video image sequence when expected based on the predicted video image and/or due to the object being present in the video image sequence when not expected based on the predicted video image). This is discussed in more detail later.

Still referring to Figure 4, in some examples, using the video image Sₜ₋₁ and the action input Aₜ₋₁, a predicted video image Pt may be obtained and used for detecting one or more errors for at least the video image Sₜ. The video image St may a next video image after the video image Sₜ₋₁ or there may be one or more intervening video images therebetween.

The predicted video image Pt may be used for detecting one or more errors for the video image St and also one or more other video images having an associated timestamp within a predetermined time range of a timestamp associated with the video image Sₜ. For example, the predicted video image Pₜ may be used for error detection with respect to a time-based segment of the received sequence of video images starting at the time t and having a predetermined duration (specified as a time duration and/or frame duration). The predetermined duration may for example be set in units of time or in units of image frames. For example, the predetermined duration may be set to a value in the range 1 to 5 seconds or a value such as 1 to 600 frames. Hence more generally, the predicted video image Pt may be obtained and used for detection of errors with respect to a time based segment corresponding to one or more video images of the received sequence of video images.

In some embodiments of the disclosure, the prediction circuitry 220 can be operable to input a video image (e.g. Sₜ₋₁) and associated action input (Aₜ₋₁) to the ML model 221 to obtain a predicted video image (e.g. Pt) and the error detection circuitry 230 can be operable to use the predicted video image for detecting one or more errors for a set of two or more video images starting at a next video image (e.g. Sₜ) after the input video image and having a predetermined duration (e.g. 10 frames).

Whilst the video images received by the receiving circuitry 210 may have a first frame rate (e.g. 60 Hz or 120 Hz), the data processing apparatus 200 can be operable to generate predicted video images at a second frame rate that is less than or equal to the first frame rate. In the case of the first and second frame rate being equal, a one to one correspondence means that a respective predicted video image is used for detection of one or more errors in a temporally corresponding video images of the sequence. In the case of the second frame rate being less than the first frame rate, a one to M (where M is an integer that is two or more) correspondence may be used such that a respective predicted video image can be used for detection of errors in two or more of the video images.

Still referring to Figure 4, in some examples an action input Aₜ₋₁ may be associated with the video image Sₜ₋₁, whilst a next action input At may be associated with the video image St. Using the video image Sₜ₋₁ and the action input Aₜ₋₁, a predicted video image may be obtained and used for detecting one or more errors for the video image(s) subsequent to the video image Sₜ₋₁ and up to and including the next video image having an associated action input (e.g. the video image St in this example). Using the video image St and the action input At, a predicted video image may be obtained and used for detecting one or more errors for the video images subsequent to the video image St and up to and including the next video image having an associated action input, and so on. As mentioned above, one or more image frames may be included between each of the image frames shown in the schematic diagram of Figure 3.

In some examples, an action input Aₜ₋₁ may be associated with the video image Sₜ₋₁, whilst a next associated action input for the video image sequence may be an action input Aₜ₊₃ associated with the video image Sₜ₊₃, for example. In this case, a video image predicted using the video image Sₜ₋₁ and the action input Aₜ₋₁ may be used for detecting errors for any of the video images St, Sₜ₊₁, Sₜ₊₂ and Sₜ₊₃. In some examples, a plurality of video images may be predicted using the video image Sₜ₋₁ and the action input Aₜ₋₁ each corresponding to a different time (e.g. time t, time t+1 and so on) for being used for detection of errors.

In the above discussion with respect to Figure 4, references to an action input associated with a video image may refer to one or more action inputs associated with a video image. In some cases, two or more action inputs may be associated with a video image. The two or more action inputs and the video image may be used by the ML model 221 to generate one or more predicted video images. For example, a first action input indicative of movement in a first direction (e.g. forward) and a second action input indicative of movement in a second direction (e.g. left or right) may be associated with a respective video image. Alternatively or in addition, a first action input indicative of movement in a first direction and a second action input indicative of a function, such as a jump function, may be associated with a respective video image.

Hence more generally, the prediction circuitry 220 is operable to generate at least one predicted video image in dependence on at least one given video image and one or more associated action inputs for the at least one given video image. Generally, speaking the predicted video image can be used as a reference for what is expected to follow the at least one given video image and detection of one or more differences with respect to the predicted video image can allow error detection. Therefore, in some embodiments of the disclosure, the error detection circuitry 230 can be configured to detect, for a plurality of video images subsequent to the at least one video image, one or more errors in dependence on a predicted video image, in which the plurality of video images subsequent to the at least one video image correspond to a temporal segment of the received video image sequence.

Referring again to Figure 2, in response to detection of one or more errors, the data processing apparatus 200 can be operable to output error data for indicating occurrence of an error. The error data may be used in a number of different ways. For example, the error data may be stored in association with one or more video image(s) for which one or more errors have been detected. In some examples, the error detection circuitry 230 can be operable to generate an error log indicative of detected errors and their associated timestamps. Optionally, the error log may also be indicative of locations of image regions for the detected errors and/or name and/or types of objects associated with the detected errors. Locations of such image regions may be detected according to the techniques to be discussed below.

In some cases the video image sequence received by the receiving circuitry 210 may correspond to a live session for a video game. The received video images may be received and processed in substantially real-time. Video images may thus be processed by the data processing apparatus 200 for allowing detection of errors in a live session. For example, the error data may be used for output to a user playing the live session for the video game. The error data may be indicative of one or more graphical elements to be output for visually indicating presence of an error. The one or more graphical elements may be capable of being composited with a video image (e.g. by overlaying on the video image) to indicate presence of an error. For example, a graphical element comprising one or more indicia and/or text may be provided. Alternatively, or in addition, the error data may be indicative of one or more sounds to be output for audibly indicating presence of an error. For example, a sound, such as a notification sound or one or more spoken words can be output to a user via one or more sound output devices for indicating presence of an error. This may be of assistance for reliably informing users (e.g. testers and/or end users) of occurrences of errors in the video game. In some examples, the error data may be indicative of a graphical element (e.g. graphical user interface element) for allowing a user to confirm and report an error may be displayed. The error data may take a number of different forms as discussed in more detail later.

In some embodiments of the disclosure, the ML model 221 has been trained using training data comprising video images for a given video game and associated action inputs. Training data may be obtained using recordings including video images and associated action inputs for one or more previous sessions for a given video game. In some embodiments of the disclosure, the training data may be specific to a single video game. In other words, video recordings and associated action inputs relating solely to a same video game may be used for training the ML model 221. In this way, the ML model can be trained specifically for a respective video game and this can potentially improve reliability of the predicted video image and thereby allow more reliable error detection. This is discussed in more detail later.

In some embodiments of the disclosure, the data processing apparatus 200 may receive video images and action inputs for a first video game for performing error detection processing thereon, and the training data for training the ML model 221 may relate to a respective video game that is different from the first video game. In some cases, the training data for training the ML model 221 may relate to a second video game different from the first video game, in which the second video game is related to the first video game.

For example, the first and second video games may be different video game titles for a same video game series (e.g. two video game titles for a video game series such as a certain first person shooter video game series or a racing game series having a number of video game titles). This can be beneficial in that for a newly released video game (for which there may be limited data available, and potentially to an extent that inhibits or prevents training a machine learning model), the ML model 221 can be trained using training data for another video game of a same video game series such that the data processing apparatus 200 can reliably detect errors for the newly released video game.

In some embodiments of the disclosure, the training data for training the ML model 221 may relate to a plurality of respective video games. For example, the data processing apparatus 200 may receive a sequence of video images (and one or more associated action inputs) for a first video game, and the ML model 221 may have been trained using training data relating to a plurality of video games, in which the plurality of video games may comprise two or more of the first video game, the second video game and a third video game. For example, the ML model 221 may have been trained using training data relating to the second video game and the third video game, in which the second video game and the third video game correspond to at least one of a same video game series and a same video game genre as the first video game. A suitable genre may be first person shooter, racing or soccer, for example.

Hence more generally, in some embodiments of the disclosure, the receiving circuitry 210 may receive a sequence of video images for a given video game and one or more action inputs associated with the sequence of video images, the ML model 221 may be trained using training data comprising one or more from the list consisting of: video images and action inputs associated with one or more other video games corresponding to a same video game series as the given video game; and video images and action inputs associated with one or more other video games corresponding to a same video game genre as the given video game, and the error detection circuitry may detect one or more errors for one or more video images included in the sequence of video images in dependence on a predicted video image obtained using the ML model 221.

In some embodiments of the disclosure, the prediction circuitry 220 may comprise a plurality of machine learning models. The prediction circuitry 220 may comprise any of a first ML model trained using training data associated with a first video game; a second ML model trained using training data associated with a second video game different from the first video game; a third ML model trained using training data associated with a plurality of related video games of a same video game series; and a fourth ML model trained using training data associated with a plurality of video games of a same video game genre. In the above discussion, the terms first, second, third and fourth are used to distinguish between the respective ML models and may be used interchangeably. Any of the first, second, third or fourth ML model may be used as the ML model 211 discussed previously with respect to Figure 2.

As explained above, it can be desirable to train an ML model using training data associated with a specific video game. Using an ML model trained for a specific video game may contribute to improving accuracy. However, training an ML model using training data associated with a specific video game can potentially be problematic due to, for example, limited availability of suitable training data and/or reduced performance when using the ML model for allowing error detection for one or more other video games. Hence, in some embodiments of the disclosure the prediction circuitry 220 may comprise a plurality of machine learning models and in response to receiving a video image sequence and associated action inputs for a video game, a selection with respect to the plurality of machine learning models may be performed to select a respective ML model that is best suited to the video game.

In some embodiments of the disclosure, the prediction circuitry 220 can be configured to receive a sequence of video images and associated action inputs for a video game and input the received data to a respective ML model selected from a plurality of ML models (such as the first to fourth ML models discussed above). Metadata indicative of a title for a video game may be associated with the received data and the prediction circuitry 220 may select a respective ML model selected from a plurality of ML models in dependence on the metadata. In some examples, matching of one or more of a video game title, a video game series and a video game genre indicated by the metadata with a respective one of the plurality of ML models may be used for allowing selection of an ML model.

One possible approach for using machine learning for detection of errors for video images could potentially use labelled training data for which video images having errors are labelled for allowing training of an ML model to learn to classify video images having errors. However, such an approach can be restrictive in that this requires errors to have already been manually identified and labelled.

In the techniques of the present disclosure, the ML model 221 can be trained using error free (or substantially error free) training data comprising video images for a video game and associated action inputs. The ML model 221 can be trained using training data comprising video images for a video game and associated action inputs to learn a function for mapping a video image and an action input associated with the video image to a predicted video image.

In some embodiments of the disclosure, the ML model 221 can be trained using reinforcement learning. For example, the ML model 221 can potentially be trained using one or more video recordings and associated action inputs for a given video game (or for a plurality of related video games) so as to learn to map a given video image and an associated action input to another video image later in the recording. Broadly speaking, a given video image can be representative of a state for the video game at a given point in time and the associated action input can be representative of an action input to be used for modifying the state to progress the video game to another state at another point in time that is ahead of the given point in time. The ML model 221 can be trained using reinforcement learning to learn to predict, using one or more video images and one or more associated action inputs in the training data, a video image that is the same as (or substantially the same as) another subsequent video image in the training data. Hence, some video images in the training data can be considered as target video images that the ML model learns to generate using one or more previous video images and associated action inputs. Behaviours that reduce differences between a predicted video image and a target video image in the training data can be rewarded whereas behaviours that increase differences between the predicted video image and the target video image can be negatively rewarded.

Through such training, the ML model 221 can learn a mapping for use in generating predicted video images which can then serve as a reference for error detection. In particular, a video image predicted using the ML model can be regarded as being error free and differences with respect to the predicted video image can be used for detection of one or more errors.

In some embodiments of the disclosure, the ML model 221 may be trained using training data that is specific to a given video game so as to learn a world model for the given video game. Moreover, the ML model 221 can be trained to learn a world model for a given video game for mapping a video image for the given video game and the action input associated with the video image to a predicted video image. As explained below, a prediction using a latent space vector for an input video image can be used to obtain a predicted video image.

In some examples, the learned world model may be formed of a vision model and a predictive model. The vision model can be operable to compress an input video image into a lower dimensional latent space vector which is capable of being used to reconstruct the original input video image. The vision model may use an architecture such as a variational eutoencoder (VAE) architecture comprising an encoder model and decoder model, or another similar architecture. Generally, the vision model can be tasked with compressing input video images to latent space vectors. The predictive model can be operable to use a latent space vector and an action input associated with the input video image to form a prediction in the latent space for obtaining an expected future image. Moreover, the predictive model can predict a future latent space vector in dependence on the latent space vector and the action input. The future latent space vector may then be processed using the vision model so as to construct the expected future video image. In some examples, the predictive model may use an architecture such as recurrent neural network (RNN) and the prediction of the future latent space vector may be performed using the latent space vector and the action input and additionally one or more hidden states of the RNN. One or more hidden states can assist in incorporating information (historical information) associated with one or more earlier video images for the prediction in the latent space.

Hence more generally, in some embodiments of the disclosure the ML model 221 may have been trained to learn a world model for a given video game, in which the world model includes a vision model for mapping an input video image for the given video game to a latent space vector, and a predictive model (e.g. using RNN architecture) to predict a future latent space vector in dependence on at least the latent space vector and the action input, in which the vision model can be operable to generate a predicted video image in dependence on the predicted future latent space vector, the predicted video image corresponding to a point in time that is ahead of the input video image. By using training data that is specific to a given video game, the weights can be learned for the world model for allowing mapping of an input video image and an action input to a predicted video image in this way.

The error detection circuitry 230 can be configured to detect one or more errors in dependence upon detection of one or more differences between a given video image and a predicted video image obtained using the ML model 221. The error detection circuitry 230 can use the predicted video image for comparison with one or more subsequent video images (being subsequent to the video image used for obtaining the predicted video image) to detect one or more differences. In response to detection of one or more errors for one or more subsequent video images, the error detection circuitry 230 can be operable to output error data for indicating occurrence of one or more errors (as discussed previously).

In some embodiments of the disclosure, the error detection circuitry 230 is configured detect one or more differences between the video image and the predicted video image based on image recognition processing. The error detection circuitry 230 may use any suitable image recognition processing for detection of one or more differences between two video images. Such image recognition processing techniques may use known computer vison techniques which may or may not use machine learning techniques. In some cases, the error detection circuitry 230 may comprise a machine learning model (different to the ML model 221) having been trained to receive two images and output data (e.g. the above mentioned error data) responsive to whether one or more differences are detected for the two images.

Figure 5 schematically illustrates a data processing apparatus 500 comprising the receiving circuitry 210, the prediction circuitry 220 and the error detection circuitry 230 as discussed previously with respect to Figure 2. In some embodiments of the disclosure, the error detection circuitry 230 comprises an image difference detector 231, as shown in Figure 5. The image difference detector 231 may receive two input video images and output a difference video image indicative of any (if present) differences between the two input images. Hence, both a predicted video image and at least one subsequent video image may be input to the image difference detector 231 and a difference video image can be obtained for indicating any differences therebetween. The image difference detector 231 may operate based on a pixel subtraction technique so as to subtract one image from another. In some examples, the image difference detector 231 may comprise a trained machine learning model. More generally, the difference video image can indicate one or more error regions for the at least one subsequent video image based on differences between the subsequent video image and the predicted video image. In some examples, the difference video image may be processed to highlight the error regions, and the difference video image may be overlayed with the at least one subsequent video image for thereby providing a visual indication of one or more error regions (parts) in the at least one subsequent video image.

In some embodiments of the disclosure, the error detection circuitry 230 is configured detect one or more differences between the video image and the predicted video image based on object recognition processing. The error detection circuitry 230 can be configured to execute an object recognition algorithm to detect one or more objects in a predicted video image and detect one or more objects in a subsequent video image. A comparison of one or more objects detected for the predicted video image and one or more objects detected for a subsequent video image may be used to detect whether there are one or more differences between the two video images. This may involve detecting whether a given object has a different visual appearance between the two video images and/or detecting whether a given object is present in one of the video images and not present in the other of the video images.

Errors associated with a video game may result in a given object having an erroneous visual appearance in one or more video images and/or may result in a given object being erroneously included or omitted from a video image. For example, a fixed virtual object for a video game (such as a building, tree or other similar object) may be rendered by the video game with an erroneous visual appearance. Such errors may arise, for example, due to errors associated with processing of graphics data (e.g. meshes and/or textures) for a virtual object which may cause an erroneous visual appearance. Alternatively or in addition, such errors may arise due to errors associated with one or more stages of a rendering pipeline (e.g. one or more errors associated with one or more shaders). For example, shader errors may result in erroneous visual appearances due to incorrect lighting. Alternatively or in addition to detection of erroneous visual appearance, the error detection circuitry 230 can be operable to detect whether one or more objects are present in the predicted video image which are not present in a subsequent video image, or vice versa (where the term subsequent video image refers to being subsequent to a video image used for generating the predicted video image). For example, in some video games an error may arise in which rather than colliding with an object, a user is able to move a viewpoint through the object (e.g. a wall) such that the content of the image changes abruptly. An example of this may be a case in which a head position for an avatar is able to move (at least partially) through a wall in a game environment to view either an empty space or another portion of a game environment expected to be obscured by the wall.

More generally, the error detection circuitry 230 can be operable to detect one or more errors based on detection of one or more of differences in visual appearance for a same object in both a predicted video image and a subsequent video image and/or based on detection of whether an object is present in only one of the predicted video image and the subsequent video image (i.e. whether an object is present in one of the predicted video image and the subsequent video image without being present in the other).

In some examples, the error detection circuitry 230 may, as a first pass, detect whether a same object(s) is/are present in both of a predicted video image and a subsequent video image. For example, the error detection circuitry 230 may use object recognition processing to detect object number and object type for each of the predicted video image and the subsequent video image and, in response to detecting a mismatch, then the error detection circuitry 230 can output data (e.g. the above mentioned error data) for indicating occurrence of one or more errors. The error detection circuitry 230 may, as a second pass, perform comparison of an object in the predicted video image with the same object in the subsequent video image for detection of whether the object has an erroneous visual appearance. In response to detection of erroneous visual appearance, the error detection circuitry 230 can output data (e.g. the above mentioned error data) for indicating occurrence of one or more errors. Such processing may be performed in parallel for each of the objects.

In some embodiments of the disclosure, the error detection circuitry 230 may use pixel value analysis to detect whether a visual appearance of a given portion (e.g. object) in a predicted video image and a subsequent video image differs by at least a threshold amount. Using object recognition, a region in a video image including a given object can be identified and the pixel values for that region extracted for analysis. Such processing may be performed with respect to both the predicted video image and a subsequent video image to obtain two respective sets of pixel data both corresponding to a same object for the two different video images. The error detection circuitry 230 may perform an analysis of the pixel values for a set of pixel data by grouping pixel values into a number of respective pixel value ranges. In this way, a comparison of the distribution of pixel values for the first set of pixel data against the distribution of pixel values for the second set of pixel data can be used for detecting whether the visual appearance for the given object differs by at least a threshold amount between the two video images. Alternatively or in addition, the error detection circuitry 230 may calculate an average pixel value (e.g. any of mean, median or modal value) for an object in each of the predicted video image and a given video image of the sequence and detect an error in response to the average pixel value for the object in the predicted video image differing from the average pixel value for the object in the given video image by at least a threshold value. The above discussion refers to comparing two regions in two video images which correspond to a same object. In some cases the two regions may instead correspond to square or rectangular regions. The error detection circuitry 230 may segment each of the predicted video image and a given video image into a plurality of 2D predefined segments (potentially each of a same shape and geometric size) and compare corresponding segments to thereby detect one or more segments as being erroneous. A comparison of pixel values for a segment of the predicted video image with pixel values for a spatially corresponding segment of the given video image can be used (e.g. comparison of an average pixel value for the segments).

In some embodiments of the disclosure, the error detection circuitry 230 may be configured to detect, for a subsequent video image, one or more errors in dependence upon whether a difference between the subsequent video image and the predicted video image satisfies a threshold condition. The threshold condition may comprise one or more of: whether difference video image generated by the image difference detector is indicative of any differences; whether a size of a region included in a difference video image generated by the image difference detector is at least a threshold size; whether a detected number of objects differs between a predicted video image and a subsequent video image; whether at least one detected object type differs between a predicted video image and a subsequent video image; whether at least one object present in the predicted video image is not present in the subsequent video image (e.g. due to an error resulting in a missing object); whether at least one object present in the subsequent video image is not present in the subsequent video image (e.g. due to an error resulting in an additional object); and whether a visual appearance for a same object present in both the predicted video image and the subsequent video image differs by at least a threshold amount.

In some embodiments of the disclosure, the error detection circuitry 230 is configured to detect one or more error regions in one or more video images. Using any of the techniques discussed above, a region in a video image can be detected as including an error. For example, an object in the video image can be detected as being erroneous, and a two-dimensional region of the video image corresponding to the shape of the object can be considered an error region. It will be appreciated that a shape of an error region can vary depending on a particular use case and detected error. In some cases, a video image may be divided into a plurality of predetermined regions (e.g. square and/or rectangular regions of an image frame) and in response to detection of an error within a predetermined region, the predetermined region may be designated as an error region.

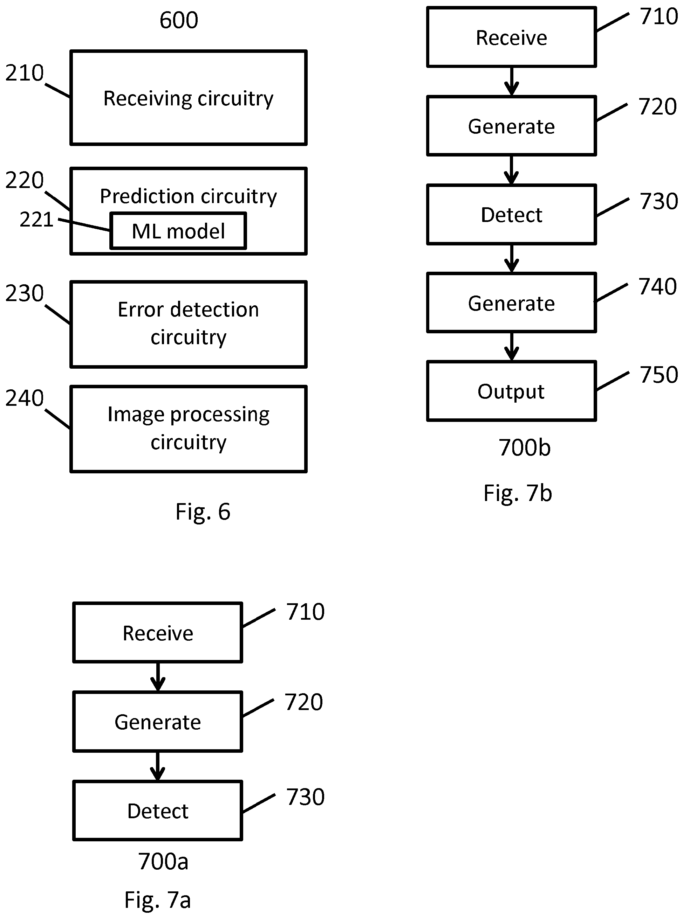

In some embodiments of the disclosure, the data processing apparatus 200 further comprises image processing circuitry. Figure 6 schematically illustrates a data processing apparatus 600 comprising the receiving circuitry 210, the prediction circuitry 220 and the error detection circuitry 230 (which have already been discussed above with reference to Figure 2 and Figure 5) and also comprising image processing circuitry 240. The image difference detector 231 may optionally be included in the apparatus 600. The image processing circuitry 240 can be configured to generate, in response to detection of one or more errors by the by the error detection circuitry 230, one or more visual indicators for one or more of the errors. Visual indicators may be generated which can be capable of being composited with a video image (e.g. by overlaying on the video image) to indicate presence of an error. For example, a visual indicator (e.g. one or more graphical elements as discussed previously) comprising one or more indicia and/or text may be provided. This could be of assistance for visually informing users (e.g. testers and/or end users) of occurrences of errors in the video game. In some examples, a visual indicator may comprise a graphical user interface element for allowing a user to provide an input for confirming and report an error.

In some embodiments of the disclosure, the image processing circuitry 240 is configured to generate one or more of the visual indicators to be overlaid on one or more of the error regions in one or more of the video images. One of more of the visual indicators can be overlaid on one or more of the error regions for emphasising the locations of the errors regions within the video image. The visual indicators may for example have a predetermined colour and a predetermined shape for allowing a user (e.g. tester or end user) to quickly and reliably be informed of the presence of an error.

In some embodiments of the disclosure, the image processing circuitry 240 is configured to generate one or more of the visual indicators to be overlaid on one or more of the error regions in one or more of the video images in real-time. Hence, during playing of a video game (e.g. by a tester or an end user), the video images can be output for display and visual indicators generated by the image processing circuitry 240 can be overlaid to visually indicate detected error regions in the video images.

Figure 7a is a schematic flowchart illustrating a method 700a in accordance with embodiments of the disclosure. The method comprises:
receiving (at a step 710) a sequence of video images for a video game and one or more action inputs associated with the sequence of video images;
generating (at a step 720) a predicted video image in dependence on at least one video image of the sequence of video images and an action input associated with the at least one video image, the step of generating comprising using a trained machine learning model to generate the predicted video image; and
detecting (at a step 730), for one or more video images subsequent to the at least one video image, one or more errors in dependence on the predicted video image.

Figure 7b is a schematic flowchart illustrating another method 700b in accordance with embodiments of the disclosure. The method 700b comprises the steps 710, 720 and 730 as discussed previously with respect to Figure 7a. In addition, the method 700b comprises:
generating (at a step 740) one or more visual indicators for one or more of the errors; and
outputting at least one video image for which one or more errors have been detected with one or more visual indicators for visually indicating one or more of the errors.

It will be appreciated that example embodiments can be implemented by computer software operating on a general purpose computing system such as a games machine. In these examples, computer software, which when executed by a computer, causes the computer to carry out any of the methods discussed above is considered as an embodiment of the present disclosure. Similarly, embodiments of the disclosure are provided by a non-transitory, machine-readable storage medium which stores such computer software.

It will also be apparent that numerous modifications and variations of the present disclosure are possible in light of the above teachings. It is therefore to be understood that within the scope of the appended claims, the disclosure may be practised otherwise than as specifically described herein.

## Claims

1. A data processing apparatus for detecting one or more errors for one or more video images for a video game, the data processing apparatus comprising:
receiving circuitry (210) to receive a sequence of video images for the video game and one or more action inputs associated with the sequence of video images, each action input specifying an action to be performed in the video game;
prediction circuitry (220) to generate a predicted video image in dependence on at least one video image of the sequence of video images and an action input associated with the at least one video image, the predicted video image representing an expected video image for the video game at a time subsequent to the at least one video image and the associated action input, the prediction circuitry comprising a trained machine learning model (221) to generate the predicted video image; and
error detection circuitry (230) to detect, for one or more video images subsequent to the at least one video image, one or more errors in dependence on the predicted video image, wherein
the error detection circuitry is configured to detect, for a given video image of the one or more video images subsequent to the at least one video image, one or more errors in dependence upon detection of one or more differences between the given video image and the predicted video image.

2. The data processing apparatus according to claim 1, wherein the machine learning model has been trained using training data comprising video images for the video game and associated action inputs.

3. The data processing apparatus according to claim 2, wherein the machine learning model has been trained using the training data to learn a function for mapping a video image and an action input associated with the video image to a predicted video image.

4. The data processing apparatus according to claim 3, wherein the machine learning model has been trained using reinforcement learning.

5. The data processing apparatus according to claim 4, wherein the machine learning model is trained to learn a world model for the video game for mapping the video image for the video game and the action input associated with the video image to the predicted video image.

6. The data processing apparatus according to any one of claims 1 to 4, wherein the training data comprises one or more from the list consisting of:
video images and action inputs associated with one or more other video games corresponding to a same video game series as the video game; and
video images and action inputs associated with one or more other video games corresponding to a same video game genre as the video game.

7. The data processing apparatus according to claim 1, wherein the error detection circuitry comprises an image difference detector (231) to generate a difference video image indicative of differences between the given video image subsequent to the at least one video image and the predicted video image.

8. The data processing apparatus according to claim 1 or claim 7, wherein the error detection circuitry is configured to detect one or more differences between the given video image and the predicted video image based on object recognition processing.

9. The data processing apparatus according to any one of claims 1 to 8, wherein the error detection circuitry is configured to detect one or more of the errors in dependence upon whether a difference between the given video image and the predicted video image satisfies a threshold condition.

10. The data processing apparatus according to any preceding claim, wherein the error detection circuitry is configured to detect one or more error regions in one or more video images subsequent to the at least one video image.

11. The data processing apparatus according to any preceding claim, comprising image processing circuitry (240) to generate, in response to detection by the error detection circuitry of one or more errors, one or more visual indicators for one or more of the errors.

12. The data processing apparatus according to claim 11 when dependent on claim 10, wherein the image processing circuitry is configured to generate one or more of the visual indicators to be overlaid on one or more of the error regions in one or more of the video images.

13. A computer-implemented method for detecting one or more errors for one or more video images for a video game, the method comprising:
receiving (710) a sequence of video images for the video game and one or more action inputs associated with the sequence of video images, each action input specifying an action to be performed in the video game;
generating (720) a predicted video image in dependence on at least one video image of the sequence of video images and an action input associated with the at least one video image, the predicted video image representing an expected video image for the video game at a time subsequent to the at least one video image and the associated action input, the step of generating comprising using a trained machine learning model to generate the predicted video image; and
detecting (730), for one or more video images subsequent to the at least one video image, one or more errors in dependence on the predicted video image, wherein
the detecting comprises detecting, for a given video image of the one or more video images subsequent to the at least one video image, one or more errors in dependence upon detection of one or more differences between the given video image and the predicted video image.

14. Computer software which when executed by a computer causes the computer to perform the method according to claim 13.

## Patentansprüche

1. Datenverarbeitungseinrichtung zum Erfassen eines oder mehrerer Fehler für ein oder mehrere Videobilder für ein Videospiel, die Datenverarbeitungseinrichtung umfassend:
eine Empfangsschaltung (210), um eine Sequenz von Videobildern für das Videospiel und eine oder mehrere Aktionseingaben zu empfangen, die mit der Sequenz von Videobildern verknüpft sind, wobei jede Aktionseingabe eine Aktion spezifiziert, die in dem Videospiel durchgeführt werden soll;
eine Vorhersageschaltung (220), um ein vorhergesagtes Videobild in Abhängigkeit von mindestens einem Videobild der Sequenz von Videobildern und einer Aktionseingabe zu erzeugen, die mit dem mindestens einen Videobild verknüpft ist, wobei das vorhergesagte Videobild ein erwartetes Videobild für das Videospiel zu einem Zeitpunkt nach dem mindestens einen Videobild und der verknüpften Aktionseingabe darstellt, die Vorhersageschaltung umfassend ein trainiertes Maschinenlernmodell (221), um das vorhergesagte Videobild zu erzeugen; und
eine Fehlererfassungsschaltung (230), um für ein oder mehrere Videobilder nach dem mindestens einen Videobild einen oder mehrere Fehler in Abhängigkeit von dem vorhergesagten Videobild zu erfassen, wobei
die Fehlererfassungsschaltung konfiguriert ist, um für ein gegebenes Videobild des einen oder der mehreren Videobilder nach dem mindestens einen Videobild einen oder mehrere Fehler in Abhängigkeit von einer Erfassung eines oder mehrerer Unterschiede zwischen dem gegebenen Videobild und dem vorhergesagten Videobild zu erfassen.

2. Datenverarbeitungseinrichtung nach Anspruch 1, wobei das Maschinenlernmodell unter Verwendung von Trainingsdaten, umfassend Videobilder für das Videospiel und verknüpfte Aktionseingaben, trainiert wurde.

3. Datenverarbeitungseinrichtung nach Anspruch 2, wobei das Maschinenlernmodell unter Verwendung der Trainingsdaten trainiert wurde, um eine Funktion zum Zuordnen eines Videobildes und einer Aktionseingabe, die mit dem Videobild verknüpft ist, zu einem vorhergesagten Videobild zu erlernen.

4. Datenverarbeitungseinrichtung nach Anspruch 3, wobei das Maschinenlernmodell unter Verwendung von Verstärkungslernen trainiert wurde.

5. Datenverarbeitungseinrichtung nach Anspruch 4, wobei das Maschinenlernmodell trainiert ist, um ein Weltmodell für das Videospiel zum Zuordnen des Videobildes für das Videospiel und der Aktionseingabe, die mit dem Videobild verknüpft ist, zu dem vorhergesagten Videobild zu erlernen.

6. Datenverarbeitungseinrichtung nach einem der Ansprüche 1 bis 4, wobei die Trainingsdaten eines oder mehrere aus der Liste umfassen, bestehend aus:
Videobildern und Aktionseingaben, die mit einem oder mehreren anderen Videospielen verknüpft sind, die einer gleichen Videospielserie wie das Videospiel entsprechen; und
Videobildern und Aktionseingaben, die mit einem oder mehreren anderen Videospielen verknüpft sind, die einem gleichen Videospielgenre wie das Videospiel entsprechen.

7. Datenverarbeitungseinrichtung nach Anspruch 1, wobei die Fehlererfassungsschaltung eine Bildunterschiederfassungsvorrichtung (231) umfasst, um ein Unterschiedvideobild zu erzeugen, das Unterschiede zwischen dem gegebenen Videobild nach dem mindestens einen Videobild und dem vorhergesagten Videobild anzeigt.

8. Datenverarbeitungseinrichtung nach Anspruch 1 oder 7, wobei die Fehlererfassungsschaltung konfiguriert ist, um einen oder mehrere Unterschiede zwischen dem gegebenen Videobild und dem vorhergesagten Videobild basierend auf Objekterkennungsverarbeitung zu erfassen.

9. Datenverarbeitungseinrichtung nach einem der Ansprüche 1 bis 8, wobei die Fehlererfassungsschaltung konfiguriert ist, um einen oder mehrere der Fehler in Abhängigkeit davon zu erfassen, ob ein Unterschied zwischen dem gegebenen Videobild und dem vorhergesagten Videobild eine Schwellenwertbedingung erfüllt.

10. Datenverarbeitungseinrichtung nach einem der vorstehenden Ansprüche, wobei die Fehlererfassungsschaltung konfiguriert ist, um einen oder mehrere Fehlerbereiche in einem oder mehreren Videobildern nach dem mindestens einen Videobild zu erfassen.

11. Datenverarbeitungseinrichtung nach einem der vorstehenden Ansprüche, umfassend eine Bildverarbeitungsschaltung (240), um als Reaktion auf die Erfassung eines oder mehrerer Fehler durch die Fehlererfassungsschaltung eine oder mehrere visuelle Anzeigen für einen oder mehrere der Fehler zu erzeugen.

12. Datenverarbeitungseinrichtung nach Anspruch 11, wenn abhängig von Anspruch 10, wobei die Bildverarbeitungsschaltung konfiguriert ist, um eine oder mehrere der visuellen Angaben zu erzeugen, die einem oder mehreren der Fehlerbereiche in einem oder mehreren der Videobilder überlagert werden sollen.

13. Computerimplementiertes Verfahren zum Erfassen eines oder mehrerer Fehler für ein oder mehrere Videobilder für ein Videospiel, das Verfahren umfassend:
Empfangen (710) einer Sequenz von Videobildern für das Videospiel und einer oder mehrerer Aktionseingaben, die mit der Sequenz von Videobildern verknüpft sind, wobei jede Aktionseingabe eine Aktion spezifiziert, die in dem Videospiel durchzuführen ist;
Erzeugen (720) eines vorhergesagten Videobildes in Abhängigkeit von mindestens einem Videobild der Sequenz von Videobildern und einer Aktionseingabe, die mit dem mindestens einen Videobild verknüpft ist, wobei das vorhergesagte Videobild ein erwartetes Videobild für das Videospiel zu einem Zeitpunkt nach dem mindestens einen Videobild und der verknüpften Aktionseingabe darstellt, der Schritt des Erzeugens umfassend das Verwenden eines trainierten Maschinenlernmodells, um das vorhergesagte Videobild zu erzeugen; und
Erfassen (730), für ein oder mehrere Videobilder nach dem mindestens einen Videobild, eines oder mehrerer Fehler in Abhängigkeit von dem vorhergesagten Videobild, wobei
das Erfassen das Erfassen, für ein gegebenes Videobild des einen oder der mehreren Videobilder nach dem mindestens einen Videobild, eines oder mehrerer Fehler in Abhängigkeit von der Erfassung eines oder mehrerer Unterschiede zwischen dem gegebenen Videobild und dem vorhergesagten Videobild umfasst.

14. Computersoftware, die, wenn sie durch einen Computer ausgeführt wird, den Computer veranlasst, das Verfahren nach Anspruch 13 durchzuführen.

## Revendications

1. Appareil de traitement de données permettant de détecter une ou plusieurs erreurs pour une ou plusieurs images vidéo pour un jeu vidéo, l'appareil de traitement de données comprenant :
un système de circuits de réception (210) pour recevoir une séquence d'images vidéo pour le jeu vidéo et une ou plusieurs entrées d'action associées à la séquence d'images vidéo, chaque entrée d'action spécifiant une action à mettre en œuvre dans le jeu vidéo ;
un système de circuits de prédiction (220) pour générer une image vidéo prédite en dépendance d'au moins une image vidéo de la séquence d'images vidéo et d'une entrée d'action associée à l'au moins une image vidéo, l'image vidéo prédite représentant une image vidéo attendue pour le jeu vidéo à un moment postérieur à l'au moins une image vidéo et à l'entrée d'action associée, le système de circuits de prédiction comprenant un modèle d'apprentissage automatique entraîné (221) pour générer l'image vidéo prédite ; et
un système de circuits de détection d'erreurs (230) pour détecter, pour une ou plusieurs images vidéo postérieures à l'au moins une image vidéo, une ou plusieurs erreurs en dépendance de l'image vidéo prédite, dans lequel
le système de circuits de détection d'erreurs est configuré pour détecter, pour une image vidéo donnée de la ou des images vidéo postérieures à l'au moins une image vidéo, une ou plusieurs erreurs en dépendance de la détection d'une ou plusieurs différences entre l'image vidéo donnée et l'image vidéo prédite.

2. Appareil de traitement de données selon la revendication 1, dans lequel le modèle d'apprentissage automatique a été entraîné à l'aide de données d'entraînement comprenant des images vidéo pour le jeu vidéo et des entrées d'action associées.

3. Appareil de traitement de données selon la revendication 2, dans lequel le modèle d'apprentissage automatique a été entraîné à l'aide des données d'entraînement pour apprendre une fonction permettant de mapper une image vidéo et une entrée d'action associée à l'image vidéo à une image vidéo prédite.

4. Appareil de traitement de données selon la revendication 3, dans lequel le modèle d'apprentissage automatique a été entraîné à l'aide d'un apprentissage par renforcement.

5. Appareil de traitement de données selon la revendication 4, dans lequel le modèle d'apprentissage automatique est entraîné pour apprendre un modèle de monde pour le jeu vidéo permettant de mapper l'image vidéo pour le jeu vidéo et l'entrée d'action associée à l'image vidéo, à l'image vidéo prédite.

6. Appareil de traitement de données selon l'une quelconque des revendications 1 à 4, dans lequel les données d'entraînement comprennent une ou plusieurs parmi la liste constituée de :
images vidéo et entrées d'action associées à un ou plusieurs autres jeux vidéo correspondant à une même série de jeux vidéo que le jeu vidéo ; et
images vidéo et entrées d'action associées à un ou plusieurs autres jeux vidéo correspondant à un même genre de jeux vidéo que le jeu vidéo.

7. Appareil de traitement de données selon la revendication 1, dans lequel le système de circuits de détection d'erreurs comprend un détecteur de différence d'image (231) pour générer une image vidéo de différence indiquant des différences entre l'image vidéo donnée postérieure à l'au moins une image vidéo et l'image vidéo prédite.

8. Appareil de traitement de données selon la revendication 1 ou la revendication 7, dans lequel le système de circuits de détection d'erreurs est configuré pour détecter une ou plusieurs différences entre l'image vidéo donnée et l'image vidéo prédite en fonction d'un traitement de reconnaissance d'objet.

9. Appareil de traitement de données selon l'une quelconque des revendications 1 à 8, dans lequel le système de circuits de détection d'erreurs est configuré pour détecter une ou plusieurs des erreurs en dépendance du fait qu'une différence entre l'image vidéo donnée et l'image vidéo prédite respecte une condition seuil.

10. Appareil de traitement de données selon l'une quelconque revendication précédente, dans lequel le système de circuits de détection d'erreurs est configuré pour détecter une ou plusieurs régions d'erreur dans une ou plusieurs images vidéo postérieures à l'au moins une image vidéo.

11. Appareil de traitement de données selon l'une quelconque revendication précédente, comprenant un système de circuits de traitement d'image (240) pour générer, en réponse à la détection par le système de circuits de détection d'erreurs d'une ou plusieurs erreurs, un ou plusieurs indicateurs visuels pour une ou plusieurs des erreurs.

12. Appareil de traitement de données selon la revendication 11 prise en dépendance de la revendication 10, dans lequel le système de circuits de traitement d'image est configuré pour générer un ou plusieurs des indicateurs visuels à superposer sur une ou plusieurs des régions d'erreur dans une ou plusieurs des images vidéo.

13. Procédé implémenté par ordinateur permettant de détecter une ou plusieurs erreurs pour une ou plusieurs images vidéo pour un jeu vidéo, le procédé comprenant :
la réception (710) d'une séquence d'images vidéo pour le jeu vidéo et d'une ou plusieurs entrées d'action associées à la séquence d'images vidéo, chaque entrée d'action spécifiant une action à mettre en œuvre dans le jeu vidéo ;
la génération (720) d'une image vidéo prédite en dépendance d'au moins une image vidéo de la séquence d'images vidéo et d'une entrée d'action associée à l'au moins une image vidéo, l'image vidéo prédite représentant une image vidéo attendue pour le jeu vidéo à un moment postérieur à l'au moins une image vidéo et à l'entrée d'action associée, l'étape de génération comprenant l'utilisation d'un modèle d'apprentissage automatique entraîné pour générer l'image vidéo prédite ; et
la détection (730), pour une ou plusieurs images vidéo postérieures à l'au moins une image vidéo, d'une ou plusieurs erreurs en dépendance de l'image vidéo prédite, dans lequel
la détection comprend la détection, pour une image vidéo donnée de la ou des images vidéo postérieures à l'au moins une image vidéo, d'une ou plusieurs erreurs en dépendance de la détection d'une ou plusieurs différences entre l'image vidéo donnée et l'image vidéo prédite.

14. Logiciel d'ordinateur qui, lorsqu'il est exécuté par un ordinateur, amène l'ordinateur à mettre en œuvre le procédé selon la revendication 13.
